**Europäisches Patentamt**

**European Patent Office**

**Office européen des brevets**

(19)

(11) Veröffentlichungsnummer: **0 103 711**
**B1**

(12) ## EUROPÄISCHE PATENTSCHRIFT

(45) Veröffentlichungstag der Patentschrift:
**19.11.87**

(21) Anmeldenummer: **83107493.5**

(22) Anmeldetag: **29.07.83**

(51) Int. Cl.⁴: **H 04 N 5/44**

(54) **Vorrichtung zur Auswertung eines Datenwortes.**

(30) Priorität: **16.09.82 DE 3234346**

(43) Veröffentlichungstag der Anmeldung:
**28.03.84 Patentblatt 84/13**

(45) Bekanntmachung des Hinweises auf die Patenterteilung:
**19.11.87 Patentblatt 87/47**

(84) Benannte Vertragsstaaten:
**AT BE CH DE LI LU NL**

(56) Entgegenhaltungen:
**DE - A - 2 823 227**
**US - A - 3 982 064**

(73) Patentinhaber: **ROBERT BOSCH GMBH, Postfach 50,**
**D-7000 Stuttgart 1 (DE)**

(72) Erfinder: **Schäfer, Thomas, Dipl.-Ing., Gabelstrasse 9,**
**3209 Schellerten 3 (DE)**

## Beschreibung

Stand der Technik

Die Erfindung geht aus von einer Vorrichtung nach der Gattung des Hauptanspruchs. Es ist bereits allgemein bekannt, zusätzlich zum üblichen Fernsehprogramm Videotexttafeln zu übertragen. Die Informationen für die Videotexttafeln werden während der Austastlücke des Fernsehbildes zeilenweise gesendet. Ebenso ist es möglich, in einer Zeile der Austastlücke (Datenzeile) Signale zu übertragen, die Informationen über den Tag der Sendung, die Art der Sendung und des Senders selbst enthalten. Ein solches digitales Fernsehkennungssystem ist z.B. unter dem Namen «ZPS» bekannt geworden. Um nun die richtige Zeile auswerten zu können, ist jeder Zeile der Austastlükke, in der Informationen für Videotext oder die Fernsehkennung übertragen werden, ein Startwort vorgeschaltet, durch das die Steuerungselektronik des Fernsehempfängers erkennen kann, welche Information übertragen wird. Durch die Erkennung des Startwortes wird das Fernsehgerät in die Lage versetzt, bestimmte Videotextseiten anzuzeigen oder zu erkennen, ob eine Datenzeile übertragen wird. Die Auswertung des Startwortes geschieht üblicherweise durch einen Mikroprozessor, der mittels eines Datenverarbeitungsprogrammes gesteuert wird und die einzelnen Bits des Startwortes analysiert. Mikroprozessorschaltungen und die dazu benötigte Software sind sehr umfangreich und für einfache Anwendungsfälle recht teuer. Sollen daher nur wenige Funktionen realisiert werden, haben die vorbekannten Anordnungen den Nachteil, dass hohe Aufwendungen getrieben werden müssen.

Aus der DE-OS 2 823 227 ist ein Verfahren und eine Anordnung zur Informationsübertragung bekannt, mittels der ein störungsfreier Empfang von Informationen sichergestellt werden soll, die beispielsweise während der Bildrücklaufzeit übertragen werden. Um nun im Falle von Störungen die gewünschte Information sicher herausfinden zu können, wird mit der Steuerinformation über den Inhalt der nun folgenden Zeichen eine zusätzliche Steuerinformation über die Anzahl der folgenden Kodewörter übertragen, nach denen die nächste Steuerinformation folgt. Dies hat zur Folge, dass Störungen während der Steuerinformation nicht dazu führen können, dass das Gerät ausser Tritt fällt, da durch die Übertragung der weiteren Information dem Empfänger bekannt ist, wann wieder eine neue Steuerinformation eintrifft, so dass sich der Empfänger darauf einstellen kann. Mit dieser Massnahme wird erreicht, dass Störungen während der Steuerinformation sich kaum auswirken, da eine höhere Redundanz gegeben ist. Weiterhin sind Schaltungseinrichtungen dargestellt, mittels denen es möglich ist, die Steuerinformation zu entschlüsseln. Hinweise, wie mit besonders einfachen Mitteln eine Auswertung eines bestimmten nach besonderen Schemata aufgebauten Codewortes vorgenommen wird, ist dieser Entgegenhaltung jedoch nicht zu entnehmen.

Vorteile der Erfindung

Die erfindungsgemässe Vorrichtung mit den kennzeichnenden Merkmalen des Hauptanspruchs hat demgegenüber den Vorteil, dass das Startwort am Beginn einer Zeile einfach erkannt wird. Als Vorteil ist insbesondere anzusehen, dass die benötigte Schaltung nur aus wenigen handelsüblichen Bauelementen besteht. Die Schaltungsanordnung ist daher leicht zu realisieren und aufgrund der wenigen Anschlüsse betriebssicher zu bauen.

Durch die in den Unteransprüchen aufgeführten Massnahmen sind vorteilhafte Weiterbildungen und Verbesserungen der im Hauptanspruch angegebenen Vorrichtung möglich. Besonders vorteilhaft ist es, das Datenwort in äquidistante Worte zu zerlegen. Dadurch lässt sich der Aufwand an Schaltmitteln beträchtlich reduzieren. Weiterhin ist es günstig, die Worte so auszubilden und zu wählen, dass sie zumindest teilweise durch das Aufwärts- oder Abwärtszählen eines Zählers in einem bekannten Code erzeugbar sind. Dadurch wird erreicht, dass die Vergleichsschaltung mittels eines Zählers realisiert werden kann und dadurch umfangreiche Speichervorrichtungen nicht notwendig werden. Günstig ist es auch, die Vergleichsworte so zu erzeugen, dass der Zählerstand eines Zählers beim Eintreffen einer Impulsgruppe, die dem Vergleichswort entspricht, um 1 erhöht wird. Die Ansteuerung des Zählers wird dadurch besonders einfach. Am leichtesten ist die Erzeugung eines Rahmenwortes für die 16. Fernsehzeile (Datenzeile) mittels eines Bi-Quinary-Zählers, der ab der Zahl 3 beginnt.

Ist das Datenwort in verschiedene Worte aufgeteilt, ist ein Freigabeimpuls vorteilhafterweise dann abzugeben, wenn jedes Wort eines Datenwortes mit dem Vergleichswort übereinstimmt. Dadurch wird sichergestellt, dass bei einer Aufteilung des Datenwortes eine Freigabe der betreffenden Zeile erst dann erfolgt, wenn das Datenwort vollständig geprüft wird. Für den Vergleichszähler wird zweckmässigerweise ein Rücksetzimpuls abgegeben, wenn eine der Zahl der Worte entsprechende Pulszahl vom Komparator abgegeben worden ist. Der Rücksetzimpuls kann entweder im Vergleichszähler selbst generiert werden oder aber mit dem Freigabeimpuls erzeugt werden. Weiterhin ist es vorteilhaft, wenn der Zähler für das Vergleichswort gesetzt ist, wenn von der Fernsehempfangsvorrichtung der Torimpuls für eine vorgegebene Zeile (Zeile 16) abgegeben wird. Durch diese Massnahme wird ein unkontrolliertes Schalten des Vergleichszählers verhindert.

Zeichnung

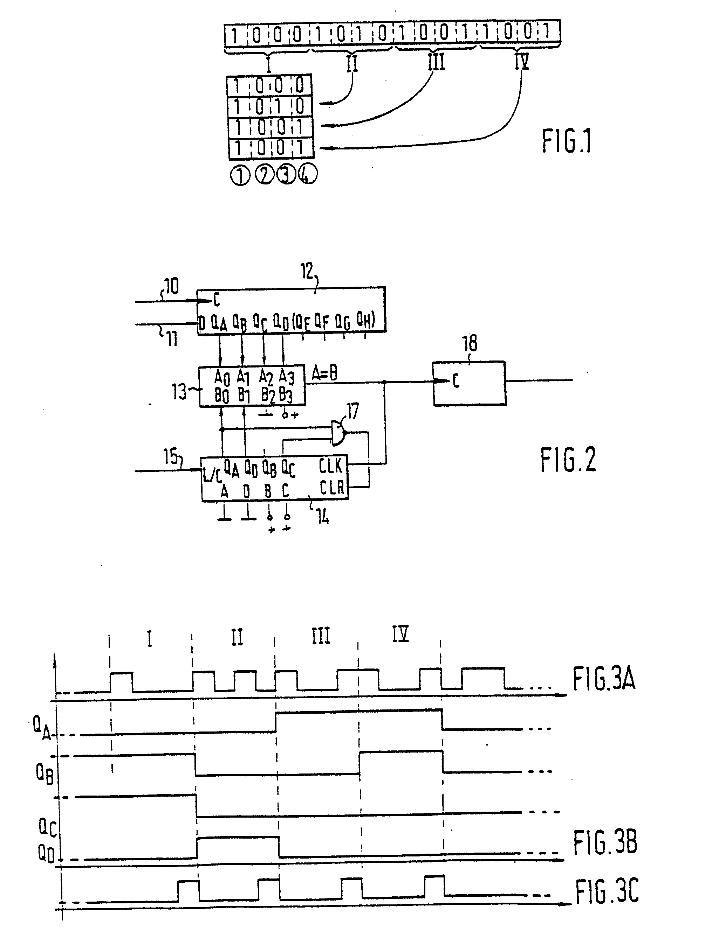

Ein Ausführungsbeispiel der Erfindung ist in der Zeichnung dargestellt und in der nachfolgenden Beschreibung näher erläutert. Es zeigen Figur 1 ein Beispiel eines Startwortes, Figur 2 ein Ausführungsbeispiel einer erfindungsgemässen Schaltungsanordnung und Figur 3 ein Impulsdiagramm zur Erläuterung des Ausführungsbeispiels nach Fig. 2.

Beschreibung des Ausführungsbeispiels

In Figur 1 ist das Startwort einer Datenzeile dargestellt, wie es beispielsweise einer Datenzeile vorausgeht. Den Nutzdaten einer jeden Datenzeile geht neben den Takteinlaufimpulsen ein Startwort voraus. Die fehlerfreie und eindeutige Decodierung dieses Startwortes bewirkt die Freigabe zur Auswertung der nachfolgenden Daten. Als Startwort wird bei den bekannten Einrichtungen ein Acht-Bit-Wort verwendet. Da die Daten der Datenzeile bi-phase codiert sind, müssen für ein Acht-Bit-Wort 16 Bitelemente ausgewertet werden. Die einzelnen Bit des Datenwortes werden seriell von der Fernsehanstalt übertragen. Zur Auswertung muss der serielle Datenstrom in parallel anliegende Daten umgewandelt werden.

Die Ausgestaltung einer Schaltungsanordnung zur Datenerkennung zeigt Figur 2. Mit 12 ist ein Schieberegister bezeichnet, das einen Takteingang C und einen Dateneingang D aufweist. An den Takteingang C ist eine Taktleitung 10 angeschlossen, die zu einem nicht dargestellten Taktgenerator führt, der durch den Datenstrom synchronisiert wird. An den Dateneingang D ist eine Leitung 11 angeschlossen, die vom Ausgang eines an sich bekannten Videoprozessors kommt. Ein solcher Videoprozessor ist beispielsweise als integrierte Schaltung SAA 5030 der Firma Valvo bekannt. Die Ausgänge $Q_A$ bis $Q_D$ des Schieberegisters 12 sind mit Eingängen $A_0$ bis $A_3$ eines Komparators 13 verbunden. Des weiteren weist der Komparator 13 Eingänge $B_0$ bis $B_3$ auf. Der Ausgang des Komparators 13 gibt ein Signal ab, wenn die Eingänge $A_0$ bis $A_3$ gleich den Eingängen $B_0$ bis $B_3$ sind. Ein solcher Komparator ist z.B. unter der Typenbezeichnung SN 7485 der Firma Texas Instruments erhältlich. Der Eingang $B_2$ des Komparators 13 ist an Masse geführt, während der Eingang $B_3$ des Komparators 13 an die positive Versorgungsleitung angeschlossen ist. Ein als Bi-Quinary geschalteter Zähler 14 weist Ausgänge QA bis QD auf, wobei die Ausgänge QA und QD mit den Eingängen $B_0$ und $B_1$ des Komparators 13 verbunden sind. Der Ausgang QA und QC führen jeweils zu einem Eingang eines Nand-Gliedes 17, dessen Ausgang mit dem Rücksetzeingang CLR verbunden ist. Weiterhin weist der Zähler Setzeingänge A bis D auf, wobei die Eingänge A und D an Masse führt sind und die Eingänge B und C an die positiven Versorgungsspannungsleitung geführt sind. An den Übernahmeeingang L/C ist eine Leitung 15 angeschlossen, an der der Torimpuls der Zeile 16 angelegt ist. Der Takteingang des Zählers 14 ist mit dem Ausgang des Komparators 13 verbunden. Als Zähler 14 eignet sich beispielsweise der integrierte Baustein SN74176 der Firma Texas Instruments. Der Zähler ist weiterhin so verdrahtet, dass er im Bi-Quinarycode zählt. Der Ausgang des Komparators 13 führt des weiteren zu einem Zähler 18, der zumindestens bis Vier zählt.

Die Wirkungsweise der Schaltungsanordnung ist anhand der Figuren 1 und 3 näher erläutert. In Figur 3a ist in Form serieller Impulse das Startwort der Figur 1 dargestellt. Das Startwort selbst ist in vier Worte I bis IV unterteilt. Das Schieberegister 12 wandelt nun den seriellen Datenstrom in parallel anstehende Daten um. Hierbei werden jeweils 4 Bit zu einem neuen Wort zusammengefasst und einzeln untersucht. Die sich aus dem Startwort ergebenden Worte sind in Figur 1 unten dargestellt. Sobald die ersten 4 Bit im Schieberegister 12 geladen sind, werden diese zum Komparator 13 übertragen und mit den Bits verglichen, die an den Eingängen $B_0$ bis $B_3$ anliegen. Wie aus Figur 1 erkennbar ist, sind die Bits in den Spalten 1 und 2 bei allen Datenwörtern gleich. Am Komparatoreingang für das Vergleichswort sind daher einfachheitshalber die Eingänge B3 und B2 fest verdrahtet, wobei am Eingang B3 eine logische Eins und am Eingang B2 eine logische Null anliegt.

Unterschiedlich sind jeweils die Bits in den Spalten 3 und 4. Das Bitmuster der Spalten 3 und 4 entspricht jedoch gerade dem Bitmuster, das sich ergibt, wenn ein Zähler im Bi-Quinarycode aufwärts geschaltet wird und mit der Zahl 3 gestartet wird. Die Zahl 3 wird zu diesem Zweck vor dem Beginn des Vergleichsvorganges in den Zähler 14 geladen. Im Bi-Quinarycode hat das Wort Drei den Wert 0110, und wird durch einen Impuls auf der Leitung 15 in den Zähler übernommen. An den Ausgängen QA und QD liegt dann jeweils eine Null an. Dies ist jedoch auch beim ersten Wort in den Spalten 3 und 4 der Fall, so dass der Komparator dieses Wort als richtig erkennt, und an seinem Ausgang einen Impuls abgibt. Mit diesem Impuls wird der Zähler 18 getaktet. Dieser Impuls ist auch am Ende des ersten Wortes in Figur 3c erkennbar. Gleichzeitig wird an den Takteingang des Zählers 14 ein Signal abgegeben und der Zählerstand im Bi-Quinarycode um Eins erhöht. In Figur 3b sind die Ausgangssignale QA bis QD des Zählers 14 dargestellt. Man erkennt, dass an den wesentlichen Ausgängen QA und QD beim nächsten Schritt jeweils eine Null und eine Eins anliegen. Dieses Teilwort wird nun mit dem zweiten Wort des Startwortes verglichen. Am Ausgang QB des Schieberegisters 12 liegt ebenfalls eine Eins an, während am Ausgang QC eine Null anliegt. Der Komparator erkennt also wiederum gleiche Worte an seinen Eingängen, so dass an seinem Ausgang ein weiterer Impuls abgegeben wird. Durch diesen Impuls wird der Zähler 14 und der Zähler 18 inkrementiert. Nach dem Auftreten von vier Gleichheitsimpulsen am Ausgang des Komparators 13 schaltet der Zähler 14 in seinen fünften Zustand, vom Zähler 18 wird ein Freigabeimpuls abgegeben. Wie aus Figur 3b erkennbar ist, liegt im fünften Zustand des Zählers kurzzeitig sowohl am Ausgang QA als auch am Ausgang QC eine logische Eins an, so dass vom Nand-Glied 17 ein Impuls abgegeben wird. Das Nand-Glied 17 setzt nunmehr den Zähler 14 in seinen Grundzustand zurück.

Durch diese Schaltungsanordnung ist es auf einfache Art und Weise möglich, beispielsweise 16 Bit-Datenwörter mit einem dynamischen 4-Bit-Vergleichswort auf Koinzidenz durch Einsatz eines Bi-Quinary-Zählers als Vergleichswortgenerator zu prüfen. Die Schaltung zeichnet sich durch einen geringen Schaltungsaufwand und einfachem Zähl- und Vergleichsbausteinen aus.

Das Beispiel zeigt nur eine Möglichkeit zur Erkennung und Auswertung von Datenworten. Prinzipiell ist es möglich, durch Wahl einer anderen Datenwortlänge und/oder eines anderen Zählercodes verschiedene Datenworte zu decodieren. Beispielsweise ist es möglich, kürzere Datenworte zu vergleichen oder bei längeren Datenworten jeweils 8 Bit gleichzeitig zu vergleichen. Eine weitere Variationsmöglichkeit im Rahmen der Erfindung ist es, statt des Bi-Quinarycode im Vergleichszähler 14 beispielsweise einen BCD-Code oder einen Eins-aus-Vier-Code zu verwenden. Damit ist es möglich, die Datenworterkennungsschaltung für verschiedenartig ausgebildete Datenwörter einzusetzen.

## Patentansprüche

1. Vorrichtung zur Auswertung eines Datenwortes, insbesondere für einen Datenzeilendecoder für Fernsehempfangsvorrichtungen, dadurch gekennzeichnet, dass das Datenwort vorzugsweise mittels eines Schieberegisters (12) abschnittsweise in parallel anliegende Worte umgewandelt wird, dass diese Worte in einem Komparator (13) mit einem entsprechenden dynamischen Vergleichswort verglichen werden, wobei die Vergleichsworte jeweils mittels eines Zählers erzeugt werden, und dass ein Signal abgegeben wird, wenn jeder Abschnitt des Datenworts mit dem mit dem Zähler (14) erzeugten entsprechenden Vergleichswort übereinstimmt.

2. Vorrichtung nach Anspruch 1, dadurch gekennzeichnet, dass das Datenwort in äquidistante Worte zerlegt ist.

3. Vorrichtung nach Anspruch 2, dadurch gekennzeichnet, dass die Worte zumindest teilweise durch das Aufwärts- oder Abwärtszählen eines Zählers (14) in einem bekannten Code erzeugbar sind.

4. Vorrichtung nach Anspruch 3, dadurch gekennzeichnet, dass die Vergleichsworte in einem Zähler (14) erzeugt sind, dessen Zählerstand um Eins erhöht wird, wenn das Datenwort mit dem Vergleichswort übereinstimmt.

5. Vorrichtung nach Anspruch 3, dadurch gekennzeichnet, dass als Vergleichswort ein Bi-Quinary-Code Verwendung findet, der bei drei beginnt.

6. Vorrichtung nach einem der Ansprüche 1 bis 5, dadurch gekennzeichnet, dass ein Freigabeimpuls abgegeben wird, wenn jedes Wort des Datenwortes mit dem Vergleichswort übereinstimmt.

7. Vorrichtung nach einem der Ansprüche 2 bis 6, dadurch gekennzeichnet, dass ein Rücksetzimpuls abgegeben wird, wenn eine der Zahl der Worte entsprechende Pulszahl vom Komparator (13) abgegeben worden ist.

8. Vorrichtung nach einem der Ansprüche 1 bis 7, dadurch gekennzeichnet, dass der Zähler (14) für das Vergleichswort gesetzt ist, wenn von der Fernsehempfangsvorrichtung der Austastimpuls für eine vorgegebene Zeile (Zeile 16) abgegeben wird.

## Claims

1. Device for evaluating a data word, particularly for a data line decoder for television receiving devices, characterized in that the data word is converted, preferably by means of a shift register (12), section by section into parallel adjacent words, that these words are compared in a comparator (13) with a corresponding dynamic reference word, the reference words being generated in each case by means of a counter, and that a signal is emitted when each section of the data word matches the corresponding reference word generated by means of the counter (14).

2. Device according to Claim 1, characterized in that the data word is split into equidistant words.

3. Device according to Claim 2, characterized in that the words can be generated in a known code at least partially by means of the up- or down-counting of a counter (14).

4. Device according to Claim 3, characterized in that the reference words are generated in a counter (14) the count of which is incremented by one when the data word matches the reference word.

5. Device according to Claim 3, characterized in that a bi-quinary code beginning at three is used as reference word.

6. Device according to one of Claims 1 to 5, characterized in that an enable pulse is emitted when each word of the data word matches the reference word.

7. Device according to one of Claims 2 to 6, characterized in that a reset pulse is emitted when a number of pulses corresponding to the number of words has been emitted by the comparator (13).

8. Device according to one of Claims 1 to 7, characterized in that the counter (14) for the reference word is set when the blanking pulse for a predetermined line (line 16) is emitted by the television receiving device.

## Revendications

1. Appareil pour interpréter des mot de données, en particulier pour un décodeur de lignes de données pour récepteurs de télévision, caractérisé en ce que les mots de données sont de préférence, convertis par portion en mots voisins parallèles au moyen d'un registre à décalage (12), en ce que ces mots sont comparés dans un comparateur (13) avec un mot de comparaison dynamique correspondant, étant précisé que les mots de comparaison sont produits respectivement au moyen d'un compteur; et en ce qu'un signal est émis lorsque chaque portion du mot de données coïncide avec le mot de comparaison correspondant produit avec le compteur (14).

2. Appareils selon la revendication 1, caractérisé en ce que le mot de données est décomposé en mots de même longueur.

3. Appareil selon la revendication 2, caractérisé en ce que les mots peuvent être au moins partiellement produits dans un code connu par le comptage ou le décomptage d'un compteur (14).

4. Dispositif selon la revendication 3, caractérisé en ce que les mots de comparaison sont produits dans un compteur dont l'état de comptage augmente de un lorsque le mot de données coïncide avec le mot de comparaison.

5. Appareil selon la revendication 3, caractérisé en ce que comme mot de comparaison on utilise un code biquinaire qui commence par trois.

6. Appareil selon une des revendications 1 à 5, caractérisé en ce qu'une impulsion de libération est émise lorsque chaque mot du mot de données coïncide avec le mot de comparaison.

7. Appareil selon une des revendications 2 à 6, caractérisé en ce qu'une impulsion de retour à l'état initial est émise lorsqu'il a été émis par le comparateur (13) un nombre d'impulsions correspondant au nombre de mots.

8. Appareil selon une des revendications 1 à 7, caractérisé en ce que l'on positionne le compteur (14) pour le mot de comparaison lorsque le récepteur de télévision émet l'impulsion de suppression pour une ligne prescrite (ligne 16).

FIG.1

FIG.2

FIG.3A

FIG.3B

FIG.3C